# EUROPEAN PATENT APPLICATION

(11) **EP 2 366 964 A1**
(43) Date of publication of application: **21.09.2011**
(21) Application number: 10380035.5
(22) Date of filing: 15.03.2010
(51) Int. Cl.: F24J 2/46

(54) **Solar field cleaning system and cleaning method used by said system**

(71) Applicant: Sener Ingenieria Y Sistemas, S.A., 48930 Las Arenas - Guecho, Vizcaya (ES)
(72) Inventor: González Elias, Antonio, 28033 Madrid (ES); Escalera Piña, Juan Antonio, 28017 Madrid (ES); Hardt González, Michael William, 28021 Madrid (ES); Villa Navarro, Jose Ramón, 28027 Madrid (ES)
(74) Representative: Carvajal y Urquijo, Isabel

(57) **Abstract**

Cleaning system for solar fields, formed by heliostats or photovoltaic solar trackers, which is formed by a plurality of mobile autonomous robots (2), and at least one transport vehicle (7), which transports the robots (2), deposits them on the heliostats or on photovoltaic solar trackers for the robots to clean them, and collects them once they have finished the cleaning. The robots (2) have a chassis (3) in which there are arranged means for the displacement along all the reflective surfaces (1) of the heliostats or photovoltaic modules (1) of the solar trackers, cleaning means arranged on the front part (4) of the chassis (3), for the cleaning of reflective surfaces (1) or the photovoltaic modules (1), and navigation means, connected to the displacement means, which orient and direct the robot (2) in its displacement along the reflective surfaces (1) or of the photovoltaic modules (1).

## Description

### TECHNICAL FIELD OF THE INVENTION

The present invention refers to the technical field of large surface mechanized cleaning systems, specifically large horizontal surfaces or surfaces with a slight inclination and elevated from the floor, and more specifically, to the cleaning of reflective surfaces or photovoltaic modules including both heliostats and solar trackers and photovoltaic solar facilities.

### BACKGROUND OF THE INVENTION

In the last few years there have appeared multiple mechanized cleaning systems and procedures for cleaning large surfaces, such as buildings, big windows, glazed panels, monuments, and particularly reflective surfaces and solar modules, used in heliostats and solar trackers and photovoltaic solar facilities. Among them, we can highlight articulated arms which apply pressure water cleaning, or brushing devices applied by articulated arms. The most modern procedures try to be as automated as possible in order to reduce workforce and human control to achieve the highest possible efficiency, which is why many of these systems incorporate robots for cleaning.

Patent document DE19907437 describes a robot for cleaning photovoltaic solar modules using suction pads to be attached to the surface to be cleaned and slide through it, and which are particularly used on inclined and flat surfaces. Another document showing a robot using suction pads to be attached to and slide through the surface to be cleaned is DE10000096, said robot cannot overturn due to some additional wheels. Besides, this robot has a control system for its sliding. These robots have the inconvenience of suffering shakings and vibrations due to the weight of the robot itself and to the discontinuous movement due to suction pads. Moreover, another disadvantage is that due to these suction pads, these robots must act on flat surfaces, having great problems to overcome steps, such as those formed by different heights and inclinations of the facets inside the solar panel.

Likewise, the document ES2218813 shows a robot for cleaning glazed façades through rollers and sprinkler nozzles which displaces through the façade surface through a crane arranged on the building roof. Other glass cleaning devices use rollers and rubber wipers, and are fastened to the surface by pads, so they have the same aforementioned inconveniences.

Besides, all these devices, in order to clean a field comprising a great number of surfaces, must clean one by one and then go to the next ones, so a great amount of time would be required to clean, for example, a field of heliostats or photovoltaic solar trackers, and they also need an operator while each one of them is cleaned.

It was therefore desirable a system which attained efficient cleaning of a great number of flat surfaces distributed, with or without steps, such as a field of heliostats or photovoltaic solar trackers.

### DESCRIPTION OF THE INVENTION

The present invention solves the existing problems in the state of the art through a cleaning system for cleaning heliostats or photovoltaic solar trackers, which is formed by mobile autonomous robots, in greater or smaller quantity, depending on the surface to be cleaned and on its distribution, and by a transport vehicle, which transports the robots and deposits them on the surfaces to be cleaned, picking them later once the robots have carried out the cleaning of the surface.

The present cleaning system lacks any kind of fixing to the reflective surfaces or photovoltaic modules; therefore, it is necessary to arrange said panels in a horizontal position or with a slight inclination to carry out the cleaning.

These robots are powered by a battery, and they have a chassis in which there are arranged displacement means, cleaning means and navigation means.

The displacement means allow the displacement of the robot along the entire surface of the heliostat or photovoltaic solar tracker. The cleaning means are arranged in the front part of the robot chassis. As for the navigation means, they are connected to the displacement, means, and orient and direct the robot in its displacement along the solar panel surface.

As the robots are completely autonomous, they do not depend on connections to the exterior through cables or wireless communications, unlike other existing robots in the state of the art.

Preferably, the displacement means of the robots have two drive wheels arranged in the intermediate area of the robot. These wheels are activated by engines, and drive the movement of the robot along the solar panel. As the drive wheels are always behind the cleaning means, it is guaranteed that they always work on the clean surface, which increases its effectiveness.

Besides the drive wheels, the robot displacement means have two complementary omnidirectional wheels, which can pivot freely 360°. One of, these wheels is at the front part of the chassis, right behind the cleaning means, and the other is at the rear part. The set of all the wheels enables the robot to turn around itself around a central axis perpendicular to the floor which provides the robot with maximum maneuverability.

These wheels increase the robot stability, and besides, the complementary front wheel helps support the weight of the cleaning means, attaining an appropriate commitment for these cleaning means for effective cleaning and minimum abrasion of the surface to be cleaned. Another advantage provided by the complementary wheels, specifically the front wheel, is that it facilitates the robot ascending and descending steps due to the different inclination and height of the different reflective surfaces or photovoltaic modules of the heliostats or solar trackers, and it avoids the impact of the cleaning means against the surface to be cleaned when climbing down the steps, protecting the surface against breaking.

Besides, to facilitate the robot climbing up and down the steps, all wheels have inclined suspension. In this way, the climbing up and down the steps will be carried out maintaining at all times contact of the cleaning means with the surface to be cleaned, since as it has been indicated above, the cleaning means are arranged in the front part of the robot.

Preferably, the robot cleaning means have a cylinder brush to clean the surface, which is located at the front part of the chassis, and which is powered by an engine. The configuration of the brush secures a constant distance of the brush with the surface to be cleaned, and thus an increased cleaning effectiveness. The brush is connected to some sprinklers of the cleaning liquids to be used, and these sprinklers are in turn connected to a deposit, from which they extract the liquids to carry out the cleaning. In order to remove the cleaning liquids once the panel has been cleaned, the cleaning means additionally have rubber wipers.

In order to provide efficient robot orientation and direction, the navigation means comprise some optical sensors in the periphery of said robots. These optical sensors are connected to a control system. In this way, the position of the robots is provided taking as reference the reflective surface or photovoltaic module edges. Another advantage of these optical sensors is that they can detect cracks or broken or deteriorated areas, in which the passage of the robots would be very complicated, making the robot alter its displacement pattern to avoid this area and to be able to continue carrying out the cleaning without obstructions or stops for the robot. Besides, the optical sensors are robust to lighting changes, being able to work with different degrees of lighting and therefore allowing the cleaning during day and night, which will guarantee a greater efficiency of the heliostats or photovoltaic solar trackers, that is, they work during the day and they are cleaned at night.

Particularly, some of the optical sensors can be joined to the periphery of the robot by means of an extensible arm, which will provide permanent contact of the optical sensors to the reflective surface or photovoltaic module edge, regardless of how far the robot is from said edge. This allows a complete localization of the robot even if it is moving through the centre of the reflective surface or photovoltaic module.

Additionally, these navigation means can have means to measure speed and acceleration, and to calculate the position of the robots in the heliostats or photovoltaic solar trackers.

Another object of the present invention is a cleaning method of the heliostat or photovoltaic solar tracker fields, which uses the previously described system. In said method first some mobile robots are transported to the solar field which is to be cleaned through a transport vehicle. The same transport vehicle carries out the distribution of at least one robot in each one of the heliostats or photovoltaic solar trackers which are to be cleaned. The number of robots deposited in each heliostat or photovoltaic solar tracker depends on the dimensions of the surface to be cleaned and on the organization of the cleaning tasks. Once the robots are deposited on the surface they carry out the cleaning stage of the surface, or of a section of the surface which corresponds, and when they finish the cleaning of the heliostats or photovoltaic solar trackers, robots are collected by the transport vehicle. Preferably, after the collection of the robots by the transport vehicle, there is a stage of maintenance of the robots.

The main advantage of this method is that it enables work in parallel. A plurality of robots can clean a great number of heliostats or photovoltaic solar trackers with minimum workforce due to the easiness of its transportation and distribution through the transport vehicle. Besides, it reduces cleaning costs, due to the reduction of robot manufacturing costs when they are mass produced.

### DESCRIPTION OF THE DRAWINGS

The following is a brief description of a series of drawings which will help understand the invention better relating to an embodiment of said invention which is presented as a non-limiting example thereof.
Figure 1 is a schematic elevated view of an embodiment of a robot of the cleaning system object of the invention.
Figure 2 is a detailed plan view of the robot of figure 1.
Figure 3 is a detailed perspective view of the robot of figures 1 and 2.
Figure 4a is a lateral view of a particular embodiment of the robot complementary wheels.
Figure 4b is a frontal view of the wheels of figure 4a.
Figure 5a is a lateral view of a particular embodiment of the robot drive wheels.
Figure 5b is a perspective view of the wheels of figure 5a.
Figure 6 is a schematic representation of an embodiment of the optical sensors of the robot navigating means.
Figure 7 is a schematic representation of a particular embodiment of some optical sensors of the robot navigating means.
Figure 8 is a schematic representation of a transport vehicle at the time when it deposits the robot on a heliostat or photovoltaic solar tracker.

In these figures reference is made to a set of elements, which are:
1. reflective surfaces of heliostats and/or photovoltaic modules of photovoltaic solar trackers
2. robots
3. cleaning robot chassis
4. chassis front part
5. chassis rear part
6. cleaning means
7. transport vehicle
8. drive wheels
9. wheel engines
10. complementary wheels
11. inclined suspension
12. cleaning system brush
13. brush engine
14. water sprinklers
15. robot battery
16. optical sensors
17. extensible arm for optical sensors
18. control system

### DESCRIPTION OF PREFERRED EMBODIMENTS OF THE INVENTION

The object of the present invention is a cleaning system of heliostats or photovoltaic solar trackers.

This cleaning system comprises several mobile autonomous robots 2, that is, they do not depend on connections to external devices through cables or in a wireless manner. These robots are powered by a battery 15, and they are located on the heliostats or photovoltaic solar trackers for their cleaning. The robots 2 have reduced dimensions as regards height, width and length for the wind to exert little force on them when they are carrying out the cleaning tasks on the heliostats or photovoltaic solar trackers.

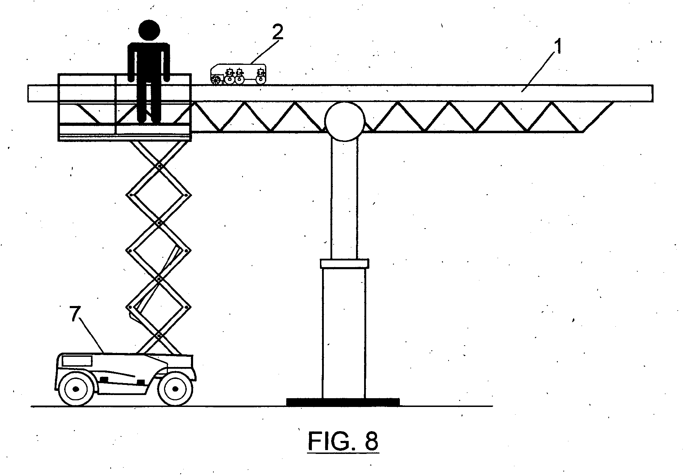

The cleaning system is completed with at least one transport vehicle 7, in charge of transporting the robots 2 and leaving them on the heliostats or photovoltaic solar trackers, and picking them up once these robots 2 have carried out the cleaning of the heliostats or photovoltaic solar trackers. Figure 8 shows a schematic view of the system object of the invention with the transport vehicle 7 and a robot 2 on the heliostat or photovoltaic solar tracker.

The practical embodiment of the transport vehicles 7 can have a great number of alternatives, but preferably it will have automatic displacement means and navigation means for its displacement between the heliostats or photovoltaic solar trackers, which will provide greater autonomy to the system, less cost and therefore greater efficiency.

Each one of the robots 2 has a chassis 3, in which there are arranged some displacement means, which enable the displacement of the robot 2 along all the reflective surfaces or photovoltaic modules 1 which are arranged in the front part 4 of the chassis 3. Besides, the robots 2 have navigation means which are connected to the displacement means and which orient and direct the robot 2 in its displacement along the reflective surfaces or photovoltaic modules 1.

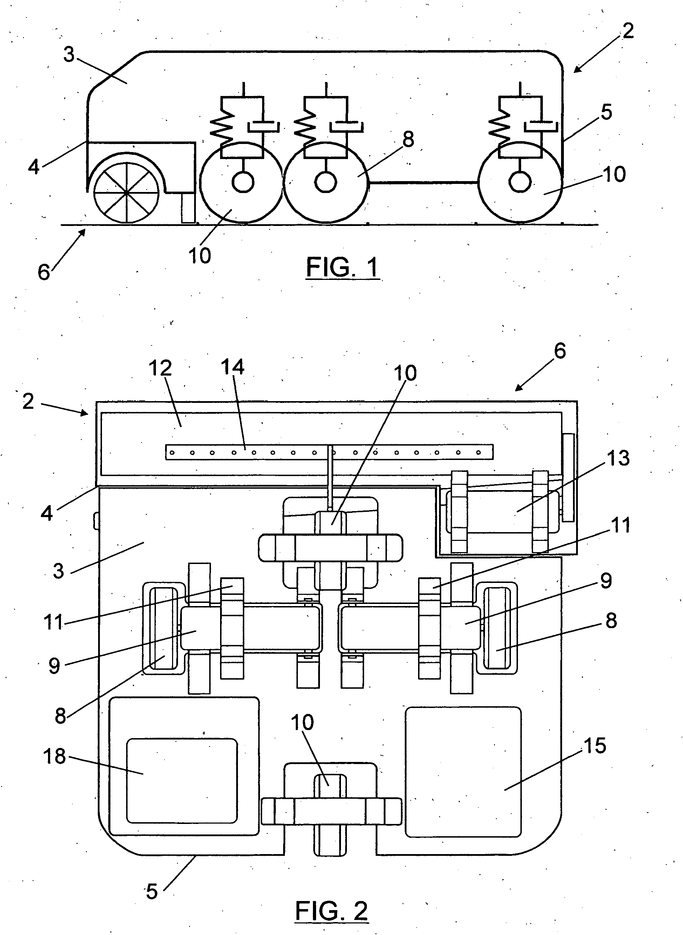

Figures 1 to 3 show a preferred embodiment of the invention in which the robot 2 displacement means have two central drive wheels 8, which are the ones directing the movement of the robot 2 along the reflective surfaces or photovoltaic modules 1, when each one of them is activated by a wheel engine 9.

these figures it can be observed that the displacement means preferably have two complementary omnidirectional wheels 10, that is, which can pivot 360° freely around an taxis perpendicular to the chassis 3. One of these complementary wheels 10 is arranged ,in the front part 4 of the chassis 3, right after the cleaning means 6, and the other is in the rear part 5 of the chassis 3. Both complementary wheels 10 stabilize the robot 2, helping it climb up and down the steps formed by differences in inclinations and height of the reflective surfaces or photovoltaic modules 1, and avoiding an excessive friction of the cleaning means against the reflective surface or photovoltaic module 1.

The set of drive wheels 8 and the complementary wheels 10 enable the robot 2 to turn around itself around a central axis perpendicular to the floor which increases the maneuverability of said robot 2.

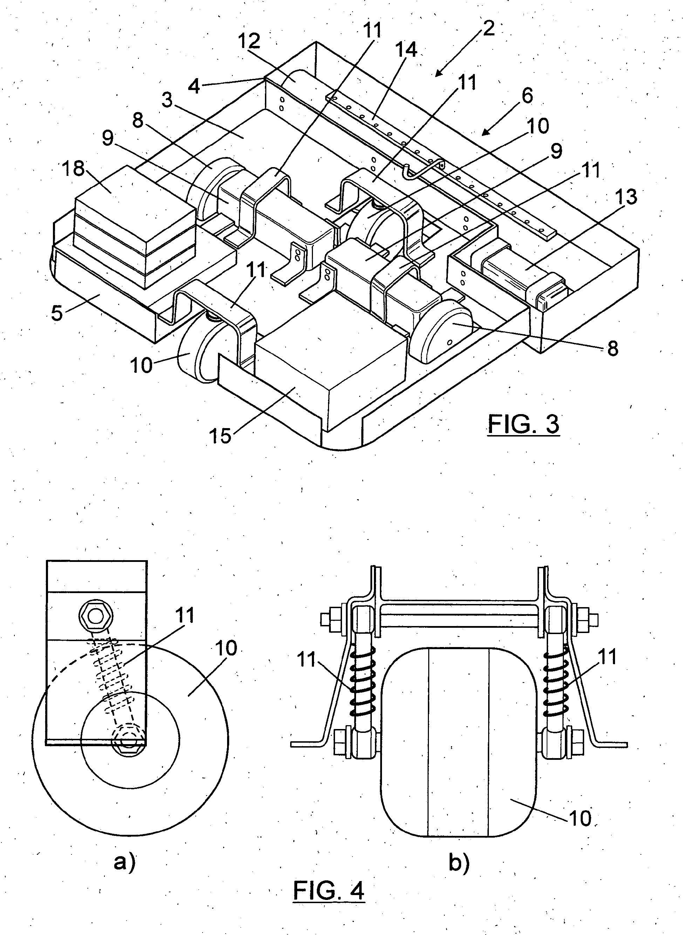

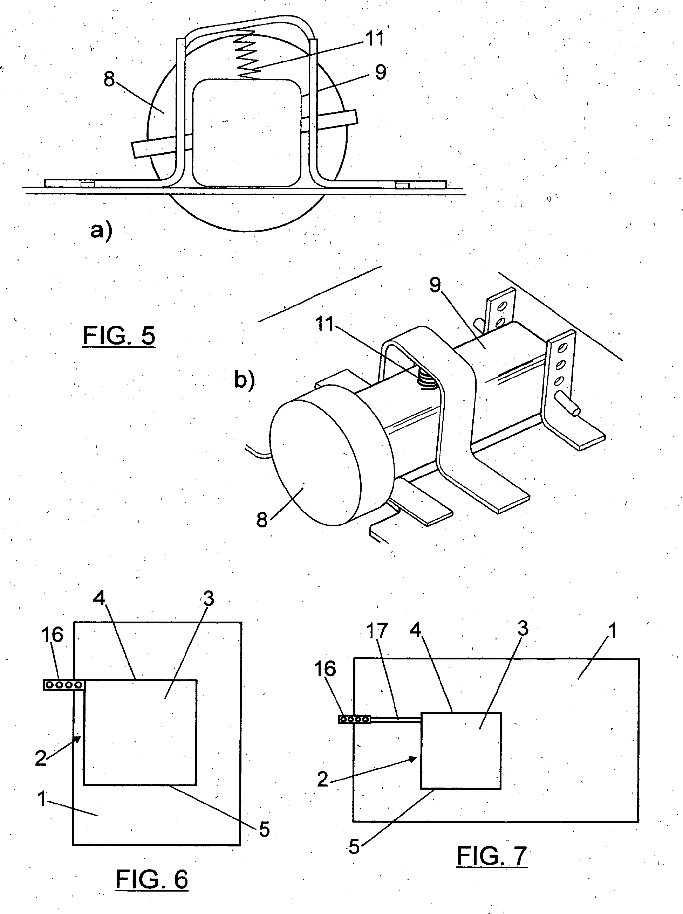

Preferably, both the drive wheels 8 and the complementary wheels 10 have inclined suspension, which facilitates the climbing up and down the steps, avoiding vibrations and impact in the whole robot 10 assembly. Figures 4a and 4b and figures 5a and 5b show the wheels 8, 10 with suspension systems.

Wheels 8, 10 need a high radius to be able to cross obstacles. A preferred embodiment of the wheels 8, 10 consists of providing them a radius which dimension is at least twice as the maximum height of any of the existing steps between the reflective surfaces or photovoltaic modules 1.

Besides, wheels 8, 10 must have enough friction with the surface of the reflective surface or photovoltaic module 1 to be cleaned to avoid displacements and to prevent the wheels 8, 10 from skidding, and besides to attain a fastening of the robots 2 on surfaces arranged with a slight inclination with respect to the horizontal plane. Besides, in this way they will have a strong tight to avoid being brought down by the wind, or skidding on wet surfaces.

In figures 1 to 3, a preferred embodiment of the cleaning means 6 can also be observed, which contains a cylindrical brush 12 for cleaning the reflective surface or photovoltaic, module 1. This brush 12 is activated by a brush engine 13 and is connected to some cleaning liquid sprinklers 14, which provide the necessary liquid for cleaning. Preferably, these cleaning liquid sprinklers 14 are formed by some outlet holes for the liquid to come out, and a set of ducts, valves and/or pumps, for the optimum dispensing of said liquid. These liquid sprinklers can be connected to a control system 18, which will regulate the liquid to be dispensed with certain prefixed parameters, such as for example the robot speed 2. The cleaning liquid sprinkling means 14 are in turn connected to a deposit from where the necessary cleaning liquid is taken. Additionally, the cleaning means 6 have rubber wipers to remove the cleaning liquid from the reflective surface or photovoltaic module 1 after its cleaning.

According to a particular embodiments of the invention, as shown in a schematic manner in figures 6 and 7, the robot 2 navigation means comprise optical sensors 16 which are arranged in the periphery of said robots 2. These optical sensors 16 are connected to a control system 18 and provide the position of the robots 2 taking as reference the edges of the reflective surfaces or photovoltaic modules 1. Besides, preferably, some of the optical sensors 16 are joined to the robot 2 periphery by an extensible arm, which will provide permanent contact of said optical sensors 16 to the edge of the reflective surface or photovoltaic module 1, regardless of how far the robot 2 is from said edge, which will allow the localization of the robot 2 even if it is displacing on the centre of the reflective surface or photovoltaic module 1.

Preferably, the robot 2 navigation means have means to calculate the speed, such as a position sensor arranged in the drive wheels 8, which measures the speed of the robots 2 and enables to calculate its position on the reflective surfaces or photovoltaic modules 1. Besides, particularly, some robots 2 also have navigation means which have a redundant system to calculate the robot 2 position, formed in turn by a gyroscope and an accelerometer. In this way, it will be possible to verify if the calculation of the robot 2 position, based on the measuring of the robot 2 speed, is incorrect, which would indicate that the drive wheels 8 are skidding and there is a friction or adhesion problem of said wheels 8.

According to a preferred embodiment of the transport vehicle 7, this is autonomous, and has its own energy recourses to carry out its tasks, that is, distribution, collection and maintenance of the robots 2. Besides, preferably, the transport vehicle 7 has a system to recover the robots 2 of the heliostats or solar trackers if these robots 2 cannot return to the collection point on their own, for example, if they are stuck.

Another object of the present invention is a cleaning method of heliostat or photovoltaic solar tracker fields, understood in the wide sense that includes heliostats and photovoltaic collectors, which uses the previously described system formed by robots 2 and a transport vehicle 7 thereof. In the first stage of this cleaning method, a transport vehicle 7 transports the robots 2 to the heliostat or photovoltaic solar tracker fields which are to be cleaned. Later, the transport vehicle 7 displaces between the heliostats or photovoltaic solar trackers and carries out the distribution of at least one robot 2 in each one of the heliostats or photovoltaic solar trackers to be cleaned. The number of robots 2 which are deposited in each heliostat or solar tracker depends on the dimensions of the surface to be cleaned and on the organization of the cleaning tasks. As the robots 2 are deposited on the heliostat or solar tracker they start their cleaning task, and the first to be deposited will be the first to do the cleaning, and therefore, they will be the first to be picked up by the transport vehicle when it goes back again to pick them up in the following stage.

Preferably, the cleaning method also has a robot 2 maintenance stage after their collection, comprising the robot cleaning substage through the appropriate cleaning devices, or the substitution of any of their parts if necessary, the filling with cleaning liquids when they have run out, and the substitution of the battery if it has run out of power.

Preferably, the robot 2 maintenance stage can be carried out directly on the transport vehicle 7, which entails a reduction of downtime in the robot 2 functioning, and an increased efficiency of the cleaning system.

Once the invention has been clearly defined, it should be noted that the previously described particular embodiments can be modified in detail as long as the main principle and essence of the invention is not altered.

## Claims

1. Cleaning system for solar fields, formed by heliostats or photovoltaic solar trackers, **characterized in that** it comprises:
a plurality of mobile autonomous robots (2), powered by a battery (15), which are located on the reflective surfaces (1) of the heliostats or on the photovoltaic modules (1) of the solar trackers, for their cleaning, each one of these robots (2) in turn comprising
- a chassis (3), in which there are arranged
- robot (2) displacement means, which enable its displacement along the entire surface of the heliostats or photovoltaic solar trackers,
- cleaning means (6) for the cleaning of the heliostats or photovoltaic solar trackers arranged on the front part (4) of the chassis (3), and
- navigation means, connected to the displacement means, which orient and direct the robot (2) in its displacement along the surface of the heliostat or photovoltaic solar tracker,
- and at least one transport vehicle (7), which transports the robots (2), deposits them on the heliostats or the photovoltaic solar trackers for them to clean them, and collects them once they have finished the cleaning.

2. Cleaning system for solar fields, according to claim 1, **characterized in that** the robot (2) displacement means comprise
- two central drive wheels (8) which direct the robot (2) movement along the reflective surfaces (1) of the heliostats or photovoltaic modules (1) of the solar trackers, each one of them being activated by
- a wheel engine (9),
- and two complementary omnidirectional wheels (10), one of which is arranged on the front part (4) of the chassis (3), behind the cleaning means (6), and the other being arranged on the rear part of the chassis (5), both complementary wheels (10) stabilize the robot (2), enabling the set of wheels (8, 10) to pivot the robot (2) around a central axis perpendicular to the floor.

3. Cleaning system for solar fields, according to the preceding claim, **characterized in that** all the wheels (8, 10) have inclined suspension (11) which facilitates the climbing up and down the steps carried out by the robot (2).

4. Cleaning system for solar fields, according to any of the claims 2 to 3, **characterized in that** the dimension of the wheels (8, 10) is at least twice the maximum height of the existing steps between the reflective surfaces (1) of the heliostats or photovoltaic modules (1) of the solar trackers.

5. Cleaning system for solar fields, according to any of the preceding claims, **characterized in that** the robot (2) cleaning means (6) comprise
- a cylinder brush (12) for cleaning the reflective surfaces (1) of the heliostats or photovoltaic modules (1) of the solar trackers, activated by
- a brush engine (13), said brush (12) being connected to
- some cleaning liquid sprinkling means (14) which provide' the liquid necessary for cleaning, which in turn are connected to
- a cleaning liquid deposit,
- and some rubber wipers to remove the cleaning liquids of the reflective surface (1) of the heliostats or photovoltaic module (1) of the solar trackers after their cleaning.

6. Cleaning system for solar fields, according to any of the preceding claims, **characterized in that** the robot (2) navigation means comprise a plurality of optical sensors (16) arranged in the periphery of said robots (2), connected to a control system (18), which provide the position of these robots (2) taking as reference the edges of the reflective surfaces (1) of the heliostats or photovoltaic modules (1) of the-solar trackers.

7. Cleaning system for solar fields, according to claim 6, **characterized in that** the robot (2) navigation means comprise a plurality of optical sensors (16) joined to the periphery of said robots (2) through at least one extensible arm (17).

8. Cleaning system for solar fields, according to any of the preceding claims, **characterized in that** the robot (2) navigation means comprise at least one position sensor arranged in the drive wheels (8) which measures the speed of said robots (2) and enables to calculate their position on the reflective surfaces (1) of the heliostats or on the photovoltaic modules (1) of the solar trackers.

9. Cleaning system for solar fields, according to any of the preceding claims, **characterized in that** the navigation means additionally comprise a robot (2) position calculation system comprising in turn a gyroscope and an accelerometer.

10. Cleaning system for solar fields, according to any of the preceding claims, **characterized in that** the transport vehicle (7) displaces between the reflective surfaces (1) of the heliostats or the photovoltaic modules (1) of the solar trackers, through automatic navigation means.

11. Solar field cleaning method, which uses the cleaning system of claims 1 to 10, **characterized in that** it comprises the stages of
- transport of some mobile robots (2) to a field of heliostats or photovoltaic solar trackers to be cleaned by a transport vehicle (7),
- distribution of at least robot (2) in each one of the heliostats or photovoltaic solar trackers to be cleaned by a transport vehicle (7),
- cleaning by at least one of the robots (2) of the section of the reflective surfaces (1) of the heliostats, or the photovoltaic modules (1) of the solar trackers where it is arranged,
- collection of the robots (2) of the heliostats or photovoltaic solar trackers in which they are arranged by the transport vehicle (7).

12. Solar field cleaning method, according to claim 11, **characterized in that** after the robot (2) collection stage of the heliostats or photovoltaic solar trackers in which they are arranged by the transport vehicle (7) there is a robot (2) maintenance stage in turn comprising the substages of:
- robot (2) cleaning through cleaning devices,
- repair of said robots (2) if necessary,
- filling of the robots (2) with cleaning liquids if necessary,
- and robot battery (15) replacement if necessary.

13. Solar field cleaning method, according to claim 12, **characterized in that** the robot (2) maintenance stage is carried out in the transport vehicle (7) thereof.
